# EUROPÄISCHE PATENTSCHRIFT

(11) **EP 1 749 158 B1**
(45) Veröffentlichungstag und Bekanntmachung des Hinweises auf die Patenterteilung: **26.08.2009**
(21) Anmeldenummer: 05752562.8
(22) Anmeldetag: 14.05.2005
(51) Int. Cl.: F16H 25/22

(54) **SPINDELMUTTER FÜR EINEN KUGELGEWINDETRIEB**
SPINDLE NUT FOR A BALL SCREW
ECROU DE VISSAGE POUR VIS D'ENTRAINEMENT A BILLES

(30) Priorität: 26.05.2004 DE 102004025683
(43) Veröffentlichungstag der Anmeldung: 07.02.2007
(73) Patentinhaber: Schaeffler KG, 91074 Herzogenaurach (DE)
(72) Erfinder: OSTERLÄNGER, Jürgen, 91448 Emskirchen (DE); ADLER, Dieter, 91074 Herzogenaurach (DE); KRAUS, Manfred, 91074 Herzogenaurach (DE); MAYER, Ralf, 91074 Herzogenaurach (DE)
(86) Internationale Anmeldenummer: PCT/EP2005/005319
(87) Internationale Veröffentlichungsnummer: WO 2005/119094

(56) Entgegenhaltungen:
- EP-A- 0 985 470
- DE-A1- 10 243 020
- PATENT ABSTRACTS OF JAPAN Bd. 2003, Nr. 12, 5. Dezember 2003 (2003-12-05) -& JP 2004 144239 A (NTN CORP), 20. Mai 2004 (2004-05-20)

## Beschreibung

Die vorliegende Erfindung betrifft ein Verfahren zum Herstellen einer Spindelmutter für einen Kugelgewindetrieb. Vorzugsweise betrifft die vorliegende Erfindung solche Kugelgewindetriebe, die als elektromechanische Lenkhilfe in Lenkeinrichtungen von Kraftfahrzeugen zum Einsatz kommen.

Aus DE 199 44 875 A1 beispielsweise ist eine Spindelmutter für einen Kugelgewindetrieb bekannt geworden, der eine endlose Kugelbahn für Kugeln aufweist. Am Innenumfang der Spindelmutter um deren Drehachse herum ist endlang einer Schraubenlinie eine Kugelrille für die Kugeln ausgebildet, die sich über mehrere Windungen erstreckt. Ferner ist eine Umlenkeinrichtung vorgesehen, in deren Umlenkkanal Kugeln von einem Ende einer gemeinsamen Windung der Kugelrille zu dem Anfang dieser gemeinsamen Windung der Kugelrille umgelenkt werden. Die Umlenkeinrichtung ist vorliegend durch eine Vielzahl von Umlenkstücken gebildet, die jeweils in einer am Umfang der Spindelmutter ausgebildeten Öffnung eingesetzt sind. Damit die Kugeln stoßfrei und geräuscharm aus der Kugelrille der Spindelmutter in den Umlenkkanal des Umlenkstücks eingeführt werden können, ist an der Spindelmutter ein Kugeleinlauf ausgebildet, der einerseits an die Kugelrille der Spindelmutter anschließt und der andererseits bis an die Öffnung der Spindelmutter reicht. Dieser Kugeleinlauf wird oftmals manuell eingearbeitet oder nachgearbeitet, was einen erheblichen Aufwand bedeutet. Während die an der Spindelmutter ausgebildete Kugelrille oftmals und vorzugsweise ein sogenanntes gotisches Profil aufweist - die Flanken der Kugelrille sind größer als der Kugeldurchmesser und schneiden sich im Fußpunkt der Kugelrille - lässt sich dieses Profil bei der Erstellung des Kugeleinlaufs nicht erreichen. Oftmals stellt sich ein konisches Einlaufprofil im Kugeleinlauf ein.

Aus EP 0 985 470 A1 war ein Verfahren zum Herstellen einer Spindelmutter eines Kugelgewindetriebes bekannt, bei dem eine spanlose Erzeugung der Kugelrille durch einen Rolliervorgang vorgeschlagen wird, wobei keine näheren Angaben über die Erzeugung des Kugeleinlaufs und den Übergang von der Kugelrille auf den Kugeleinlauf gemacht werden.

Aufgabe der vorliegenden Erfindung ist es, ein Verfahren zum Herstellen einer Spindelmutter nach den Merkmalen des Oberbegriffs des Anspruchs 1 anzugeben, bei der die Kugeln möglichst stoßfrei und geräuscharm aus der Kugelrille der Spindelmutter in den Umlenkkanal der Umlenkeinrichtung eingeführt werden können.

Ein erfindungsgemäßes Verfahren zum Herstellen einer Spindelmutter für einen Kugelgewindetrieb sieht vor, dass am Innenumfang der Spindelmutter um deren Drehachse herum und entlang einer Schraubenlinie mit einem Werkzeug spangebend eine Kugelrille für die Kugeln eingearbeitet wird. Diese Kugelrille erstreckt sich über wenigstens eine Windung. Beginnend an wenigstens einer Stelle der Kugelrille und in Abhängigkeit von dem relativen Verdrehfortschritt zwischen dem Werkzeug und der Spindelmutter wird das Werkzeug nun nach radial zugestellt, um weiteres Material von der Spindelmutter zu entfernen. In Abhängigkeit von den relativen weiteren Verdrehfortschritt und endend an einer anderen Stelle der Kugelrille wird diese Zustellung wieder zurückgenommen und die weitere Einarbeitung der Kugelrille erfolgt, wobei infolge der Zustellung und/oder der Zurücknahme der Zustellung des Werkzeuges ein Kugeleinlauf gebildet ist, und wobei am Umfang der Spindelmutter eine zwischen den beiden Stellen angeordnete Öffnung vorgesehen ist, bis zu der sich der Kugeleinlauf erstreckt. Dieser Vorgang kann je nach Wahl des Werkzeuges wiederholt werden, bis schließlich die Kugelrille und der Kugeleinlauf ihre endgültige Kontur erreicht haben.

Bei diesem erfindungsgemäßen Verfahren kann demzufolge mit lediglich einem Werkzeug sowohl die Kugelrille als auch der Kugeleinlauf gebildet werden. Durch den Wegfall eines Absetzens des Werkzeuges und Ansetzten eines neuen Werkzeuges - um den Kugeleinlauf eventuell auszubilden - ist gewährleistet, dass der Übergang von der Kugelrille auf den Kugeleinlauf kantenfrei und sanft erfolgt. Zudem ist ein manuelles Arbeiten nicht erforderlich. Da das Werkzeug vorzugsweise mit einem gotischem Profil versehen ist, ist zudem sichergestellt, dass sowohl die Kugelrille als auch der Kugeleinlauf mit einem gotischem Querschnittsprofil versehen ist.

Dieses Verfahren lässt sich vorzugsweise dadurch weiterbilden, dass zunächst vorzugsweise in einem Trennvorgang die Öffnung am Umfang der Spindelmutter vorgesehen wird, und daran anschließend die Kugelrille mit dem Kugeleingang erstellt wird. Das Werkzeug durchläuft demzufolge radial zugestellt den Bereich der Öffnung und entfernt danach weiter Material an der Spindelmutter. Alternativ kann aber auch zunächst die Kugelrille mit dem wenigstens einen Kugeleingang gebildet werden und daran anschließend ebenfalls vorzugsweise in einem Trennvorgang die Öffnung am Umfang der Spindelmutter erstellt werden.

Das Werkzeug ist vorzugsweise ein vorzugsweise mit einer quer zur Kugelrille angeordneten Drehachse rotierendes Schleifwerkzeug, dessen rotierender Mantel im Querschnitt durch das Schleifwerkzeug gesehen das Gegenprofil der Kugelrille und des Kugeleinlaufs aufweist.

Derartige Schleifwerkzeuge können günstig für die Fertigung großer Stückzahlen von Spindelmuttern bereitgestellt werden.

Andere spanabhebende Werkzeuge können zum Einsatz kommen. Dieses Werkzug muß nicht wie eine profilierte Schleifscheibe formgebunden sein. Beispielsweise kann ein kleines Werkzeug quer zur Erstreckung der Kugelrille bewegt werden, um das Querschnittsprofil der Kugelrille und des Kugeleinlaufs zu erzeugen.

Wenn das erfindungsgemäß vorgeschlagene Verfahren bei Spindelmuttern mit Einzelumlenkung zum Einsatz kommt, bietet sich die folgende erfindungsgemäße Variante an: die Spindelmutter ist mit einer Vielzahl von über den Umfang verteilt angeordneten Öffnungen versehen, in denen jeweils ein mit dem Umlenkkanal versehenes Umlenkstück einsetzbar ist, um die Kugeln von dem Anfang zu dem Ende einer gemeinsamen Windung der Kugelrille umzulenken. Die Öffnungen trennen in Achsrichtung der Spindelmutter gesehen jeweils eine Schulter der Kugelrille, wobei umfangsseitig einander benachbart angeordnete Öffnungen in eine gemeinsame Windung hineinragen, und wobei unter der radialen Zustellung des Werkzeuges der Kugeleinlauf an der einen Öffnung und unter dem Zurücknehmen der Zustellung der Kugeleinlauf an der der einen Öffnung benachbart angeordneten anderen Öffnung hergestellt ist. Demzufolge kann lediglich durch Zurücknehmen der Zustellung ein weiterer Kugeleinlauf erstellt werden. Dieses Vorgehen ermöglicht ein rationelles Herstellverfahren. Bei der zuletzt beschriebenen Verfahrensvariante bleibt das Werkzeug zwischen diesen beiden Kugeleinläufen radial zugestellt, das ist möglich, weil in diesen sogenannten Totgangbereich niemals Kugeln gelangen. Eine Variante hierzu kann sein, die radiale Zustellung im Totgangbereich wegzunehmen. Letztere Variante erfordert zusätzliche Werkzeugbewegungen, reduziert aber die Dauer und das Ausmaß der spangebenden Bearbeitung. Dieser Totgangbereich kann also unbearbeitet bleiben.

Die entlang der Schraubenlinie ausgebildete Kugelrille muß nicht bis zu den Stirnseiten der Spindelmutter bearbeitet sein denn zumindest ein Teil der letzten Windung der Kugelrille bildet einen Totgangbereich. Auf diese Weise kann der Bearbeitungsaufwand an der Spindelmutter weiter reduziert werden.

Ferner ermöglicht das erfindungsgemäße Verfahren die Herstellung von Kugelgewindetreiben, bei denen die an der Spindelmutter ausgebildete Kugelrille und der Kugeleinlauf beide ein gleiches Querschnittsprofil aufweisen. Mit der Erfindung kann demzufolge auch der Kugeleinlauf ein gotisches Querschnittsprofil aufweisen. Dieses gotische Querschnittsprofil trägt zu einem einwandfreien Einführen der Kugeln in den Umlenkkanal der Umlenkeinrichtung bei. Vorzugsweise beginnt der Kugeleinlauf im Längsschnitt gesehen an der Kugelrille, schließt also dort an, und endet an dem Umlenkkanal, wobei der Kugeleinlauf auf diesem Weg nach radial außen vorzugsweise krümmungsstetig ansteigt. Wenn die Kugelrille in eine Ebene abgewickelt wird, weist dieser Kugeleinlauf eine vorzugsweise konvexe Form auf, vorzugsweise mit einem im Querschnitt gesehen sogenannten gotischen Profil. Die gleiche Ausbildung der Querschnitte des Kugeleinlaufs und der Kugelrille ermöglichen auch einen kantenfreien Übergang von der Kugelrille auf den Kugeleinlauf und von dort in den Umlenkkanal der Umlenkeinrichtung. Anstelle eines gotischen Profils können auch Profile geeignet sein, die derart beschaffen sind, dass die Kugeln darin geführt sein können.

Wenn wie bei den eingangs genannten Stand der Technik Einzelumlenkungen vorgesehen sind, ist es besonders günstig, wenn sich der Kugeleinlauf, gemessen um die Drehachse der Spindelmutter, über einen Winkel α von bis zu 60 Grad, vorzugsweise bis zu 20 Grad erstreckt, wobei dieser Winkel an der Öffnung beginnt und an der Kugelrille endet. Als untere Grenze empfiehlt sich ein Winkel von ca. 4 Grad. Innerhalb dieser angegebenen Winkel steigt der Kugeleinlauf stetig an, so dass sichergestellt ist, dass die Kugel lediglich allmählich zunehmend belastet werden, wenn sie den Kugeleinlauf verlassen und in die Kugelrille der Spindelmutter einlaufen, in der sie belastet sind. Gleichzeitig ist sichergestellt, dass die Belastung der Kugeln lediglich allmählich abnimmt, wenn die Kugeln aus den belasteten Bereich der Kugelrille über den Kugeleinlauf in den Umlenkkanal der Umlenkeinrichtung eingelenkt werden. Bei üblichen Baugrößen von Spindeln, Spindelmuttern, Kugeln entspricht der angegebene Winkelbereich dem halben bis zum zweifachen Kugeldurchmesser.

Alternativ zu den sogenannten Einzelumlenkungen ist auch ein Kugelgewindetrieb bekannt, bei dem die Spindelmutter mit zwei am Umfang angeordneten Öffnungen versehen ist, zwischen denen sich die Kugelrille über mehrere Windungen erstreckt. Am Außenumfang der Spindelmutter ist dann eine mit den Umlenkkanal versehene Außenumlenkung vorgesehen. Diese sogenannte Außenumlenkung kann beispielsweise durch ein Rohr gebildet sein, dessen eines Ende in die eine Öffnung und dessen anderes Ende in die andere Öffnung eingreift, wobei sich der Kugeleinlauf gemessen um die Drehachse der Spindelmutter herum erfindungsgemäß über einen Winkel von bis zu 360 Grad erstreckt, welcher Winkel an der Öffnung beginnt und an der Kugelrille endet. Aber auch kleine Winkel, vorzugsweise 180 Grad sind günstig. Durch diesen großen Winkel wird der Vorteil der lediglich allmählichen Belastung und Endlastung der Kugeln noch deutlicher hervorgehoben. Wenn auf die rotierende Spindelmutter eine stationäre Querkraft einwirkt, zeigt sich der Vorteil großer Einlaufwinkel in besonders günstige Weise: die Unstetigkeit im Steifigkeitsverhalten des Kugelgewindetriebs ist in der Steigung der Kugelrille begründet. Der Kugeleinlauf durchläuft während einer vollen Umdrehung einmal die Ebene, in der die Querkraft angreift. Je größer der Einlaufwinkel ist, desto sanfter erfolgt der Einlauf der Kugel in den Umlenkkanal oder aus dem Umlenkkanal heraus. Wenn beispielsweise eine Spindelmutter mit drei tragenden vollen Windungen der Kugelrillen versehen ist, und die erste und die letzte Windung jeweils über 360 Grad einen Kugeleinlauf bilden, dann trägt eine Windung während einer Umdrehung immer, während die außenliegenden Windungen zunehmend oder abnehmend belastet in Abhängigkeit vom Verdrehfortschritt sind. Die Lebensdauer, Laufkultur und ein leiser Lauf werden positiv beeinflusst.

Der Winkel sowohl bei der Einzelumlenkung als auch bei der zuletzt beschriebenen Außenumlenkung kann auch vorzugsweise unter Berücksichtigung der Betriebslasten erfolgen. Unter einen gegebenen Betriebslast federn die Kugeln ein. Die Länge des Kugeleinlaufs kann etwa der Größe der maximalen Kugeleinfederungen entsprechen. Das bedeutet, dass die zunächst unter voller Last stehende Kugel federelastisch verformt ist und sich dann unter dem Einlauf in den Kugeleinlauf elastisch entspannt und am Ende des Kugeleinlaufs - also bei Eintritt in den Umlenkkanal der Umlenkeinrichtung ihre ursprüngliche Kugelgestalt wieder einnimmt. Die Länge des Kugeleinlaufs kann demzufolge auch mit dem Verformungsverhalten der eingesetzten Kugeln korrespondieren. Unter Berücksichtigung dieser Betriebslasten können bei an die Kugeleinfederung angepaßten Winkeln der Kugeleinläufe Spindelmuttern bereitgestellt werden, bei denen ein sehr leiser Einlauf der Kugeln aus der Kugelrille in den Umlenkkanal der Umlenkeinrichtung sichergestellt werden.

Nachstehend wird die Erfindung anhand von 2 in insgesamt 9 Figuren abgebildeten Ausführungsbeispielen erläutert. Es zeigen:
- Figur 1: eine erfindungsgemäße Spindelmutter in perspektivischer Darstellung,
- Figur 2: einen Querschnitt durch eine an der Spindelmutter gemäß Figur 1 ausgebildeten Kugelrille,
- Figur 3: eine Abwicklung der Kugelrille aus Figur 2,
- Figur 4: einen Ausschnitt der erfindungsgemäßen Spindelmutter im Querschnitt,
- Figur 5: einen Ausschnitt der erfindungsgemäßen Spindelmutter geschnitten entlang der Kugelrille, abgewickelt in einer Ebene,
- Figur 6: eine weitere erfindungsgemäße Spindelmutter in perspektivischer Darstellung,
- Figur 7: die Spindelmutter aus Figur 6 im Längsschnitt,
- Figur 8: die Spindelmutter aus Figur 6 im Querschnitt und
- Figur 9: eine Abwicklung der Kugelrille der Spindelmutter gemäß Figur 6 in schematischer Darstellung.

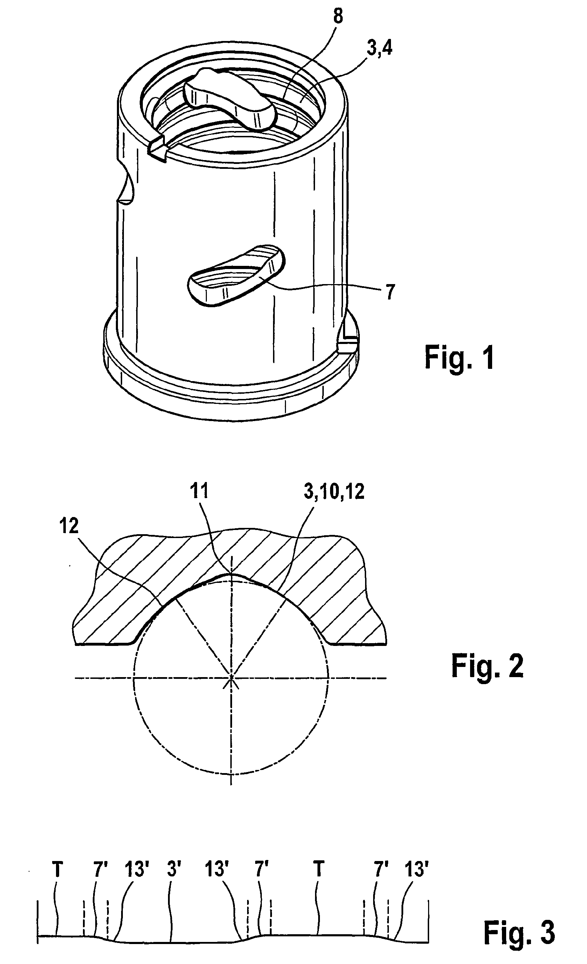

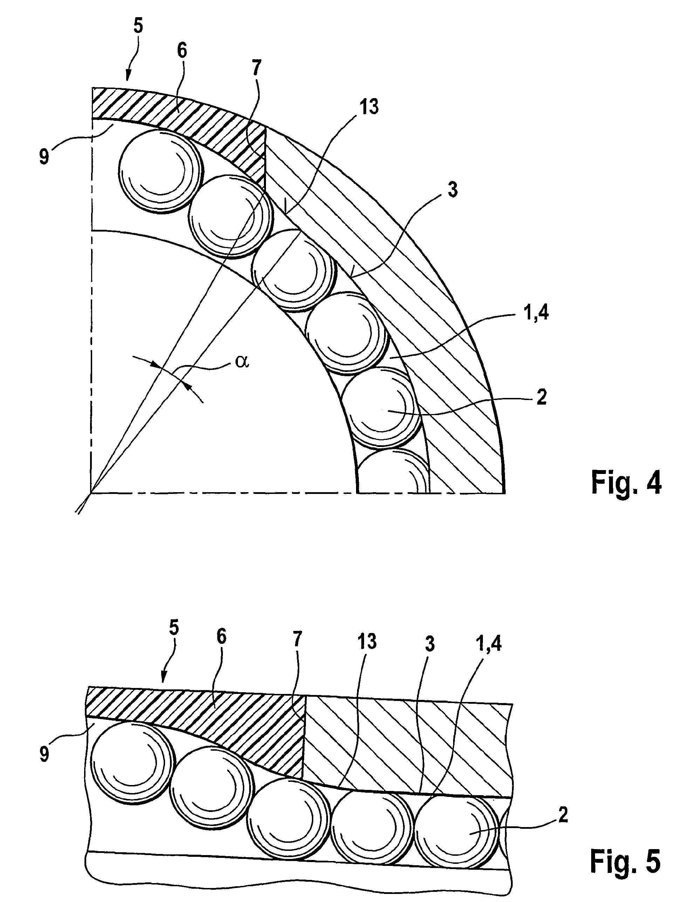

Das erste Ausführungsbeispiel gemäß den Figuren 1 bis 5 zeigt eine Spindelmutter mit sogenannter Einzelumlenkung. Diese Spindelmutter weist eine endlose Kugelbahn 1 für Kugeln 2 auf (siehe Figur 4). Der Figur 1 ist zu entnehmen, dass am Innenumfang der Spindelmutter um die Drehachse der Spindelmutter herum und entlang einer Schaubenlinie eine Kugelrille 3 für die Kugeln 2 ausgebildet ist. Diese Kugelrille 3 erstreckt sich über mehrere Windungen 4. Ferner ist eine Umlenkeinrichtung 5 vorgesehen, um Kugeln 2 von dem Anfang zu dem Ende einer gemeinsamen Windung 4 umzulenken. Diese Umlenkeinrichtung 5 umfaßt eine Vielzahl von Umlenkstücken 6, die jeweils in eine am Umfang der Spindelmutter vorgesehene Öffnung 7 eingesetzt sind (Figur 1). Die Spindelmutter ist mit einer Vielzahl von Öffnungen 7 versehen. Der Figur 1 ist zu entnehmen, dass jede Öffnung 7 eine Schulter 8 der Kugelrille 3 durchtrennt. Diese Schulter 8 liegt - wenn man die Spindelmutter längs durchschneidet und betrachtet - zwischen zwei axial benachbart angeordneten Abschnitten der Kugelrille 3.

Die in diese Öffnungen 7 eingesetzten Umlenkstücke 6 weisen einen Umlenkkanal 9 auf, wie er in Figur 4 dargestellt ist.

Die Kugelrille 3 weist ein gotisches Querschnittsprofil 10 auf, wie es in der Figur 2 schematisch abgebildet ist. Dieser Figur kann entnommen werden, dass die Kontur des gotischen Profils 10 abweicht von der Kreiskontur, die hier gestrichelt eingezeichnet ist. Im Fußpunkt 11 der Kugelrille 3 treffen die beiden Flanken 12 der Kugelrille 3 aufeinander. Der Figur 2 ist zu entnehmen dass zwischen dem Fußpunkt 11 und dem eingezeichneten Kreis ein Abstand vorhanden ist, während im Bereich der Flanken 12 der Kreis diese Flanken 11 tangiert.

In dem endlosen Umlauf der Kugel 2 in der Kugelbahn 1 werden die Kugeln 2 von dem Anfang zu dem Ende einer gemeinsamen Windung 4 der Kugelrille 3 umgelenkt. Figur 4 zeigt im Querschnitt durch die Spindelmutter ausschnittsweise den Übergang von der Kugelrille 3 in den Umlenkkanal 9. Im Übergangsbereich ist an der Spindelmutter ein Kugeleinlauf 13 angeformt. Dieser Kugeleinlauf weist ebenfalls im Querschnitt gesehen ein gotisches Profil auf, das dem gotischem Profil 10 der Kugelrille 3 entspricht. Die Länge des Kugeleinlaufs 13 entlang der Kugelrille 3 entspricht etwa einem Winkel α um die Spindelmutteerachse herum, welcher Winkel α bis zu 60 Grad betragen kann. Dieser Kugeleinlauf 13 schließt einerseits kantenfrei an die Kugelrille 3 der Spindelmutter an und schließt anderseits kantenfrei an den Umlenkkanal 9 des Umlenkstücks 6 an. Der Figur 4 ist ferner zu entnehmen, dass der Kugeleinlauf 13 beginnend an der Kugelrille 3 und endend an dem Umlenkkanal 9 krümmungsstetig nach radial außen ansteigt. Diese Kontur ist in diesem Querschnitt gesehen konvex geformt. Figur 4 zeigt ferner deutlich, dass der Kugeleinlauf 13 bis an die Öffnung 7 heranreicht. Figur 5 verdeutlicht noch einmal die konvexe Ausbildung des Kugeleinlaufs 13 in der abgewickelten Darstellung der Spindelmutter, wie sie in Figur 5 auszugsweise abgebildet ist.

Zur Herstellung dieser Spindelmutter bietet sich in günstiger Weise das folgende erfindungsgemäße Verfahren an. Zunächst wird am Innenumfang der Spindelmutter um deren Drehachse herum und entlang einer Schraubenlinie mit einem hier nicht dargestellten Werkzeug spangebend die Kugelrille 3 für die Kugeln eingearbeitet. Danach oder gleichzeitig mit dieser Bearbeitung wird nun beginnend an einer Stelle der Kugelrille 3 in Abhängigkeit von dem relativen Verdrehfortschritt zwischen dem Werkzeug und der Spindelmutter das Werkzeug nach radial außen zugestellt um weiteres Material von der Spindelmutter zu entfernen. Auf diese Weise wird zunächst der in Figur 4 abgebildete Kugeleinlauf 13 hergestellt. Endend an einer entlang der Schraubenlinie folgenden Stelle wird in Abhängigkeit von dem relativen Verdrehfortschritt zwischen dem Werkzeug und der Spindelmutter diese Zustellung wieder zurückgenommen und die weitere Einarbeitung der Kugelrille 3 kann erfolgen. Zwischen diesen beiden erwähnten Stellen ist die Öffnung 7 angeordnet, bis zu der sich der Kugeleinlauf 13 erstreckt.

Die Öffnung 7 ist vorzugsweise in einem Trennvorgang - beispielsweise Stanzen - erstellt, im Anschluß daran kann in der beschriebenen Weise die Kugelrille 3 mit dem Kugeleingang 13 hergestellt werden.

Alternativ zu diesem Vorgehen kann aber auch zunächst die Kugelrille 3 mit dem Kugeleingang 13 in der beschriebnen Weise hergestellt werden, und im Anschluß daran kann ebenfalls vorzugsweise in einem Trennvorgang die Öffnung 7 hergestellt werden.

Unter Berücksichtigung der Lage der Öffnungen 7 können die weiteren in Um fangsrichtung und entlang der Schaubenlinie hintereinander angeordneten Kugeleinläufe in einem Zug mit dem erwähnten Werkzeug hergestellt werden. Zur Herstellung eines ersten Kugeleinlaufs wird das Werkzeug in der beschriebenen Weise radial zugestellt unter einem Verdrehfortschritt zwischen dem Werkzeug und der Spindelmutter. In dieser radial zugestellten Lage fährt das Werkzeug nun entlang der Schraubenlinie, bis es in den Bereich der sich umfangsseitig anschließenden Öffnung gelangt. Nun kann das Werkzeug unter relativen Verdrehfortschritt zwischen Werkzeug und Spindelmutter wieder radial zurückgenommen werden, sodaß das Werkzeug, wenn es den Bereich dieser folgenden Öffnung wieder verlässt und auf dem Niveau der Kugelrille der Spindelmutter liegt, einen weiteren Kugeleingang hergestellt hat. Zwischen diesen beiden beschriebenen Kugeleingängen liegt ein so genannter Totgang, in den bei derartigen Kugelgewindetrieben keine Kugeln gelangen. Das zwangsweise Vorhandensein dieses Totgangs ermöglicht, dass das Werkzeug zwischen diesen beiden Kugeleingängen nicht radial zurückgenommen zu werden braucht.

Die Länge des Kugeleinlaufs (siehe Figur 4) - gemessen entlang der Schraubenlinie - entspricht hier in etwa der maximalen Einfederung der Kugeln 2, welche Einfederung folge einer Belastung der Kugeln 2 ist.

Der beschriebene Herstellungsprozess der Kugeleinläufe 13 ist in Figur 3 schematisch dargestellt, wobei der Bewegungsablauf des nicht dargestellten Werkzeugs von links nach rechts erfolgt. Die in Figur 3 vorgesehenen Bezugszeichen bezeichnen jeweils das radiale Niveau des Werkzeugs in den einzelnen Abschnitten, die sich wie folgt aufteilen: 7' bezeichnet den Bereich innerhalb einer Öffnung 7, an den sich der Bereich 13' zur Herstellung des Kugeleingangs 13 anschließt. Das Werkzeug ist schließlich auf dem Niveau der Kugelrille 3, was vorliegend mit den Bezugszeichen 3' angedeutet ist. Das Werkzeug fährt nun über etwa eine Windung entlang der Kugelrille 3. Nun schließt sich der Bereich 13' zur Herstellung eines weiteren Kugeleingangs 13 an. Das Werkzeug bleibt in zugestellter Lage und durchläuft nun den sogenannten Totgangbereich T und fährt weiter in den Bereich der nächsten Öffnung 7, was hier mit 7' bezeichnet ist. Beim Verlassen dieser Öffnung wird die radiale Zustellung des Werkzeugs wieder zurückgenommen, sodass der nächste Kugeleingang 13 hergestellt wird, was hier mit den Bezugszeichen 13' angegeben ist. Ab hier wiederholt sich der beschriebene Zyklus.

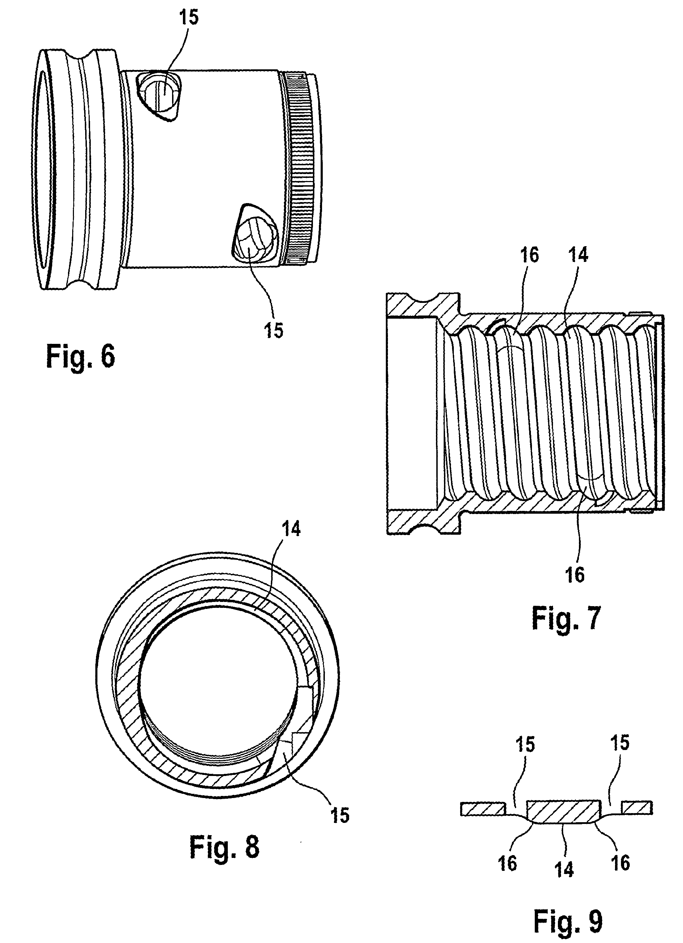

Ein mit sogenannter Außenumlenkung versehender Kugelgewindetrieb ist in den Figuren 6 bis 9 abgebildet. Figur 6 zeigt eine weitere erfindungsgemäße Spindelmutter in perspektivischer Darstellung, die innenseitig mit einer Kugelrille 14 versehen ist. Ferner sind am Umfang der Spindelmutter zwei Öffnungen ausgebildet, wobei eine hier nicht abgebildete beispielsweise rohrförmige Außenumlenkung mit den beiden Rohrenden jeweils in eine Öffnung eingreift. Ebenso wie bei dem vorangegangenen Ausführungsbeispiel sind auch hier Kugeleinläufe 16 vorgesehen, die in Figur 7 dargestellt sind. Figur 8 zeigt einen Querschnitt durch die Spindelmutter im Bereich einer der Öffnungen 15.

In Figur 9 ist in teilweiser Darstellung die Spindelmutter mit der Kugelrille 14 in abgewickelter Form dargestellt. Dieser schematischen Darstellung sind zu entnehmen, die Ausbildung der Öffnungen 15 die Kugeleinläufe 16 und die Kugelrille 14. Diese abgebildete Abwicklung der Kugelrille ist lediglich schematisch. Insbesondere der Bereich des Kugeleinlaufs 16 kann sich bis zu einer vollen Windung entlang der Schraubenbahn erstrecken.

### Bezugszeichen

- 1: Kugelbahn
- 2: Kugel
- 3: Kugelrille
- 4: Windung
- 5: Umlenkeinrichtung
- 6: Umlenkstück
- 7: Öffnung
- 8: Schulter
- 9: Umlenkkanal
- 10: gotisches Profil
- 11: Fußpunkt
- 12: Flanke
- 13: Kugeleinlauf
- 14: Kugelrille
- 15: Öffnung
- 16: Kugeleinlauf

## Patentansprüche

1. Verfahren zum Herstellen einer Spindelmutter für einen Kugelgewindetrieb, vorzugsweise aus Stahl, wobei am Innenumfang der Spindelmutter um deren Drehachse herum und entlang einer Schraubenlinie mit einem Werkzeug spangebend eine Kugelrille (3, 14) für die Kugeln (2) eingearbeitet wird, die sich über wenigstens eine Windung (4) erstreckt, wobei beginnend an wenigstens einer Stelle der Kugelrille (3, 14) in Abhängigkeit von dem relativen Verdrehfortschritt zwischen dem Werkzeug und der Spindelmutter das Werkzeug nach radial außen zugestellt wird, um weiteres Material von der Spindelmutter zu entfernen, wobei endend an einer anderern Stelle in Abhängigkeit von dem relativen Verdrehfortschritt zwischen dem Werkzeug und der Spindelmutter die Zustellung wieder zurückgenommen wird und die weitere Einarbeitung der Kugelrille (14) erfolgt, wobei infolge der Zustellung und/oder der Zurücknahme der Zustellung des Werkzeuges ein Kugeleinlauf (13, 16) gebildet ist, und wobei am Umfang der Spindelmutter eine zwischen den beiden Stellen angeordnete Öffnung (7, 15) vor gesehen ist, bis zu der sich der Kugeleinlauf (13, 16) erstreckt.

2. Verfahren nach Anspruch 1, bei dem zunächst, vorzugsweise in einem Trennvorgang, die Öffnung (7, 15) am Umfang der Spindelmutter und daran anschließend die Kugelrille (3, 14) mit dem wenigstens einen Kugeleinlauf (13, 16) erstellt wird.

3. Verfahren nach Anspruch 1, bei dem zunächst die Kugelrille (3, 14) mit dem wenigstens einen Kugeleinlauf (13, 16) und daran anschließend, vorzugsweise in einem Trennvorgang, die Öffnung (7, 15) am Umfang der Spindelmutter erstellt wird.

4. Verfahren nach Anspruch 1, bei dem das Werkzeug ein vorzugsweise mit einer quer zur Kugelrille (3, 14) angeordneten Drehachse rotierendes Schleifwerkzeug ist, dessen rotierender Mantel im Querschnitt durch das Schleifwerkzeug gesehen das Profil der Kugelrille (3, 14) und des Kugeleinlaufs (13, 16) aufweist.

5. Verfahren nach Anspruch 1 zum Herstellen einer Spindelmutter, die mit einer Vielzahl von über den Umfang verteilt angeordneten Öffnungen (7) versehen ist, in denen jeweils ein mit dem Umlenkkanal (9) versehenes Umlenkstück (6) einsetzbar ist, um die Kugeln (2) von dem Anfang zu dem Ende einer gemeinsamen Windung (4) der Kugelrille (3) umzulenken, wobei die Öffnungen (7) in Achsrichtung der Spindelmutter gesehen jeweils eine Schulter (8) der Kugelrille (3) durchtrennen, und wobei umfangsseitig einander benachbart angeordnete Öffnungen (7) in eine gemeinsame Windung (4) hineinragen, und wobei unter der Zustellung des Werkzeugs der Kugeleinlauf (13) an der einen Öffnung (7) und unter dem Zurücknehmen der Zustellung der Kugeleinlauf (13) an der der einen Öffnung (7) benachbart angeordneten anderen Öffnung (7) hergestellt ist.

6. Spindelmutter für einen Kugelgewindetrieb, hergestellt nach dem Verfahren des Anspruchs 1, mit einer endlosen Kugelbahn (1) für Kugeln (2), und mit einer am Innenumfang der Spindelmutter um deren Drehachse herum und entlang einer Schraubenlinie angeordneten Kugelrille (3, 14) für die Kugeln (2), die sich über wenigstens eine Windung (4) erstreckt, und mit einer Umlenkeinrichtung (5), in deren Umlenkkanal (9) Kugeln (2) von einem Ende einer Windung (4) zu einem Anfang einer Windung (4) umzulenken, wobei die Spindelmutter mit einerseits an die Kugelrille (3, 14) anschließenden und andererseits an den Umlenkkanal (9) anschließenden Kugeleinläufen (13, 16) versehen ist, wobei die Kugelrille (3, 14) und der Kugeleinlauf (13, 16) beide ein gleiches Querschnittprofil aufweisen.

7. Spindelmutter nach Anspruch 6, bei der die Spindelmutter an wenigstens einer am Umfang angeordneten Stelle mit einer Öffnung (7, 15) versehen ist, in die die Umlenkeinrichtung (5) eingreift, wobei der Kugeleinlauf (13, 16) bis an die Öffnung (7, 15) reicht.

8. Spindelmutter nach Anspruch 6, bei der der Kugeleinlauf (13, 16) im Längsschnitt gesehen beginnend an der Kugelrille (3, 14) und endend an dem Umlenkkanal (9) nach radial außen vorzugsweise krümmungsstetig ansteigt.

9. Spindelmutter nach Anspruch 6, bei der der Kugeleinlauf (13, 16) im Längsschnitt durch die abgewickelte Kugelrille (3, 14) gesehen konvex geformt ist.

10. Spindelmutter nach Anspruch 6, bei der das Querschnittprofil als sogenanntes gotisches Profil (10) ausgebildet ist.

11. Spindelmutter nach Anspruch 6, bei der der Kugeleinlauf (13, 16) kantenfrei an die Kugelrille (3, 14) und den Umlenkkanal (9) der Umlenkeinrichtung (5) anschließt.

12. Spindelmutter nach Anspruch 7, bei der die Spindelmutter mit einer Vielzahl von über den Umfang verteilt angeordneten Öffnungen (7) versehen ist, in denen jeweils ein mit dem Umlenkkanal (9) versehenes Umlenkstück (6) angeordnet ist, wobei die Kugeln (2) von dem Anfang zu dem Ende einer gemeinsamen Windung (4) der Kugelrille (3) umgelenkt werden, und wobei sich der Kugeleinlauf (13) gemessen um die Drehachse der Spindelmutter über einen Winkel von bis zu 60 Grad, vorzugsweise bis zu 20 Grad erstreckt, welcher Winkel α an der Öffnung (7) beginnt und an der Kugelrille (3) endet.

13. Spindelmutter nach Anspruch 7, bei der die Spindelmutter mit zwei am Umfang angeordneten Öffnungen (15) versehen ist, zwischen denen sich die Kugelrille (14) über mehrere Windungen erstreckt, wobei am Außenumfang der Spindelmutter eine mit dem Umlenkkanal versehene Außenumlenkung vorgesehen ist, deren eines Ende in die eine Öffnung und deren anderes Ende in die andere Öffnung eingreift, wobei sich der Kugeleinlauf (16) gemessen um die Drehachse der Spindelmutter über einen Winkel von bis zu 360 Grad erstreckt, welcher Winkel an der Öffnung (15) beginnt und an der Kugelrille (14) endet.

14. Spindelmutter nach Anspruch 6, bei der die Kugelrille (3, 14) an den Enden der Spindelmutter hinter dem jeweils letzten Kugeleinlauf (13, 16) unbearbeitet ist.

## Claims

1. Method for producing a spindle nut for a ball screw, preferably made of steel, wherein a ball groove (3, 14) for the balls (2) is machined using a tool at the inner circumference of the spindle nut, around the axis of rotation thereof and along a helical line, the groove extending over at least one winding (4), wherein, beginning at least at one point of the ball groove (3, 14), depending on the relative rotary progress between the tool and the spindle nut, the tool is advanced radially outward in order to remove further material from the spindle nut, wherein, ending at another point, depending on the relative rotary progress between the tool and the spindle nut, the advancement is retracted again and the ball groove (14) is incorporated further, wherein, as a consequence of the advancement and/or the retraction of the advancement of the tool, a ball inlet (13, 16) is formed, and wherein at the circumference of the spindle nut there is provided an opening (7, 15) which is arranged between the two points and up to which the ball inlet (13, 16) extends.

2. Method according to Claim 1, wherein firstly, preferably in a separating process, the opening (7, 15) is produced at the circumference of the spindle nut and subsequently thereto the ball groove (3, 14) with the at least one ball inlet (13, 16) is produced.

3. Method according to Claim 1, wherein firstly the ball groove (3, 14) with the at least one ball inlet (13, 16) is produced and subsequently thereto, preferably in a separating process, the opening (7, 15) is produced at the circumference of the spindle nut.

4. Method according to Claim 1, wherein the tool is a grinding tool which rotates preferably with an axis of rotation arranged transversely to the ball groove (3, 14) and the rotating sleeve of which has, viewed in cross section through the grinding tool, the profile of the ball groove (3, 14) and the ball inlet (13, 16).

5. Method according to Claim 1 for producing a spindle nut provided with a large number of openings (7) which are arranged distributed over the circumference and into each of which a deflection piece (6) provided with the deflection channel (9) can be inserted to deflect the balls (2) from the start to the end of a common winding (4) of the ball groove (3), wherein the openings (7) each sever, viewed in the axial direction of the spindle nut, a shoulder (8) of the ball groove (3) and wherein openings (7) arranged circumferentially adjacent to one another protrude into a common winding (4), and wherein under the advancement of the tool the ball inlet (13) is produced at one opening and under the retraction of the advancement the ball inlet (13) is produced at the other opening (7) arranged adjacent to the one opening (7).

6. Spindle nut for a ball screw, produced using the method of Claim 1, with an endless ball track (1) for balls (2), and with a ball groove (3, 14) for the balls (2) that is arranged at the inner circumference of the spindle nut, around the axis of rotation thereof and along a helical line, and extends over at least one winding (4), and with a deflection device (5), in the deflection channel (9) of which balls (2) can be deflected from an end of a winding (4) to a start of a winding (4), wherein the spindle nut is provided with ball inlets (13, 16) on the one hand adjoining the ball groove (3, 14) and on the other hand adjoining the deflection channel (9), wherein the ball groove (3, 14) and the ball inlet (13, 16) both have the same cross-sectional profile.

7. Spindle nut according to Claim 6, wherein the spindle nut is provided at at least one point arranged on the circumference with an opening (7, 15) with which the deflection device (5) engages, wherein the ball inlet (13, 16) reaches up to the opening (7, 15).

8. Spindle nut according to Claim 6, wherein the ball inlet (13, 16) rises, viewed in longitudinal section, beginning at the ball groove (3, 14) and ending at the deflection channel (9), radially outward, preferably with constant curvature.

9. Spindle nut according to Claim 6, wherein the ball inlet (13, 16) is shaped convexly, viewed in longitudinal section through the unwound ball groove (3, 14).

10. Spindle nut according to Claim 6, wherein the cross-sectional profile is embodied as what is known as a gothic profile (10).

11. Spindle nut according to Claim 6, wherein the ball inlet (13, 16) adjoins in an edge-free manner the ball groove (3, 14) and the deflection channel (9) of the deflection device (5).

12. Spindle nut according to Claim 7, wherein the spindle nut is provided with a large number of openings (7) which are arranged distributed over the circumference and in each of which a deflection piece (6) provided with the deflection channel (9) is arranged, wherein the balls (2) are deflected from the start to the end of a common winding (4) of the ball groove (3), and wherein the ball inlet (13) extends, measured about the axis of rotation of the spindle nut, over an angle of up to 60 degrees, preferably up to 20 degrees, which angle α begins at the opening (7) and ends at the ball groove (3).

13. Spindle nut according to Claim 7, wherein the spindle nut is provided with two openings (15) which are arranged at the circumference and between which the ball groove (14) extends over a plurality of windings, wherein there is provided at the outer circumference of the spindle nut an outer deflector which is provided with the deflection channel and one end of which engages with one opening and the other end of which engages with the other opening, wherein the ball inlet (16) extends, measured about the axis of rotation of the spindle nut, over an angle of up to 360 degrees, which angle begins at the opening (15) and ends at the ball groove (14).

14. Spindle nut according to Claim 6, wherein the ball groove (3, 14) is unmachined at the ends of the spindle nut after the in each case last ball inlet (13, 16).

## Revendications

1. Procédé de fabrication d'un écrou de broche pour une vis à bille, de préférence en acier, dans lequel, à la périphérie interne de l'écrou de broche, autour de son axe de rotation et le long d'une ligne hélicoïdale, une rainure à bille (3, 14) pour les billes (2) est usinée avec un outil par enlèvement de copeaux, et s'étend sur au moins une spire (4), l'outil étant approché radialement vers l'extérieur en commençant en au moins un point de la rainure à bille (3, 14) en fonction de l'avance de rotation relative entre l'outil et l'écrou de broche, afin d'enlever davantage de matière de l'écrou de broche, l'approche étant inversée à nouveau à la fin en un autre point de l'écrou de broche en fonction de l'avance de rotation relative entre l'outil et l'écrou de broche, et l'usinage subséquent de la rainure à bille (14) étant effectué, une entrée de bille (13, 16) étant formée suite à l'avance et/ou à l'inversion de l'avance de l'outil, et une ouverture (7, 15) étant prévue sur la périphérie de l'écrou à bille entre les deux points, jusqu'à laquelle s'étend l'entrée de billes (13, 16).

2. Procédé selon la revendication 1, dans lequel, au début, de préférence dans une opération de découpage, l'ouverture (7, 15) est créée à la périphérie de l'écrou de broche et ensuite la rainure à bille (3, 14) est crée avec l'au moins une entrée de bille (13, 16).

3. Procédé selon la revendication 1, dans lequel, au début, la rainure à bille (3, 14) est créée avec l'au moins une entrée de bille (13, 16) et ensuite, de préférence dans une opération de découpage, l'ouverture (7, 15) est créée à la périphérie de l'écrou de broche.

4. Procédé selon la revendication 1, dans lequel l'outil est un outil de meulage tournant de préférence avec un axe de rotation disposé transversalement à la rainure à bille (3, 14), dont l'enveloppe rotative présente, vue en section transversale à travers l'outil, le profil de la rainure à bille (3, 14) et de l'entrée de bille (13, 16).

5. Procédé selon la revendication 1, pour la fabrication d'un écrou de broche, qui est pourvu d'une pluralité d'ouvertures (7) réparties sur la périphérie, dans lesquelles peut être insérée à chaque fois une pièce de déflexion (6) pourvue d'un canal de déflexion (9), afin de dévier les billes (2) du début à la fin d'une spire commune (4) de la rainure à bille (3), les ouvertures (7), vues dans la direction axiale de l'écrou de broche, divisant à chaque fois un épaulement (8) de la rainure à bille (3), et des ouvertures (7) adjacentes du côté de la périphérie pénétrant dans une spire commune (4), et l'entrée de bille (13) étant créée au niveau d'une ouverture (7) lors de l'avance de l'outil, et l'entrée de bille (13) au niveau de l'autre ouverture (7) adjacente à la première ouverture (7) étant créée lors de l'inversion de l'avance.

6. Ecrou de broche pour une vis à bille, fabriqué selon le procédé de la revendication 1, comprenant une piste de bille sans fin (1) pour des billes (2), et comprenant une rainure à bille (3, 14) pour les billes (2), disposée à la périphérie interne de l'écrou de broche tout autour de son axe de rotation et le long d'une ligne hélicoïdale, qui s'étend sur au moins une spire (4), et comprenant un dispositif de déflexion (5), dans le canal de déflexion (9) duquel des billes (2) sont déviées d'une extrémité d'une spire (4) à un début d'une spire (4), l'écrou de broche étant pourvu d'entrées de bille (13, 16) se raccordant d'une part à la rainure à bille (3, 14) et d'autre part au canal de déflexion (9), la rainure à bille (3, 14) et l'entrée de bille (13, 16) présentant toutes deux un profil en section transversale identique.

7. Ecrou de broche selon la revendication 6, dans lequel l'écrou de broche est pourvu, en au moins un point de la périphérie, d'une ouverture (7, 15) dans laquelle vient en prise le dispositif de déflexion (5), l'entrée de bille (13, 16) s'étendant jusqu'à l'ouverture (7, 15).

8. Ecrou de broche selon la revendication 6, dans lequel l'entrée de bille (13, 16), vue en coupe longitudinale, monte radialement vers l'extérieur de préférence avec une courbure constante, en commençant à la rainure à bille (3, 14) et en se terminant au canal de déflexion (9).

9. Ecrou de broche selon la revendication 6, dans lequel l'entrée de bille (13, 16) a une forme convexe, vue en coupe longitudinale à travers la rainure à bille déroulée (3, 14).

10. Ecrou de broche selon la revendication 6, dans lequel le profilé en section transversale est réalisé sous forme d'un profilé (10) dit gothique.

11. Ecrou de broche selon la revendication 6, dans lequel l'entrée de bille (13, 16) se raccorde sans arête à la rainure à bille (3, 14) et au canal de déflexion (9) du dispositif de déflexion (5).

12. Ecrou de broche selon la revendication 7, dans lequel l'écrou de broche est pourvu d'une pluralité d'ouvertures (7) dans lesquelles est prévue à chaque fois une pièce de déflexion (6) pourvue du canal de déflexion (9), les billes (2) étant déviées du début à la fin d'une spire commune (4) de la rainure à bille (3) et l'entrée de bille (13), mesurée autour de l'axe de rotation de l'écrou de broche, s'étendant sur un angle allant jusqu'à 60 degrés, de préférence jusqu'à 20 degrés, cet angle α commençant à l'ouverture (7) et se terminant à la rainure à bille (3).

13. Ecrou de broche selon la revendication 7, dans lequel l'écrou de broche est pourvu de deux ouvertures (15) disposées sur la périphérie, entre lesquelles s'étend la rainure à bille (14), sur plusieurs spires, une déviation extérieure pourvue du canal de déflexion étant prévue sur la périphérie extérieure de l'écrou de broche, dont une extrémité vient en prise dans une ouverture et dont l'autre extrémité vient en prise dans l'autre ouverture, l'entrée de bille (16), mesurée autour de l'axe de rotation de l'écrou de broche, s'étendant sur un angle allant jusqu'à 360 degrés, cet angle commençant à l'ouverture (15) et se terminant à la rainure à bille (14).

14. Ecrou de broche selon la revendication 6, dans lequel la rainure à bille (3, 14) est non usinée aux extrémités de l'écrou à broche derrière la dernière entrée de bille respective (13, 16).
